# EUROPEAN PATENT APPLICATION

(11) **EP 4 679 152 A1**
(43) Date of publication of application: **14.01.2026**
(21) Application number: 23934167.0
(22) Date of filing: 20.04.2023
(51) Int. Cl.: G02B 6/38, G02B 6/50

(54) **OUTDOOR WATERPROOF FIBER OPTIC CONNECTOR**

(71) Applicant: UCL Trading Co., Ltd., Daejeon 34015 (KR); UCLSwift Co.,Ltd., Daejeon 34015 (KR)
(72) Inventor: JUN, Kun-Ik, Hamyang-gun Gyeongsangnam-do 50003 (KR); KANG, Pil-Sun, Cheongju-si Chungcheongbuk-do 28752 (KR)
(74) Representative: BCKIP Part mbB
(86) International application number: PCT/KR2023/005354
(87) International publication number: WO 2024/219518

(57) **Abstract**

The present invention relates to an outdoor waterproof fiber optic connector and, more specifically, to an outdoor waterproof fiber optic connector, which is a fiber optic connector inserted and mounted into a closure for branching a single optical cable, has an insertion groove and a stepped portion formed at the outer periphery of the fiber optic connector correspondingly insertion-fastened to an insertion hole of the closure so as to have a structure that can be conveniently and easily attached/detached even without a separate fixing means while being in contact with a fixing means in the insertion hole, and further includes a sealing member in contact with the inner periphery of the insertion hole, and thus the present invention can have a waterproof function of blocking the inflow of foreign substances and moisture through the insertion hole in which the fiber optic connector is mounted.

## Description

### Technical Field

The present invention relates to an outdoor waterproof fiber optic connector capable of being correspondingly latched and mounted to a fiber optic connector locking device in an insertion hole of a closure and being easily fixed and unfixed by having an insertion groove and a stepped portion formed at an outer periphery of the outdoor waterproof fiber optic connector.

### Background Art

Optical cable closures are sealed containers for protecting a fusion splicing unit or a branching unit of an optical fiber.

The optical cable closures are usually installed on utility poles and at locations where optical cables branch, and has some of the optical cables to be branched and mounted therein and the optical cables to be branched to multiple destinations where the optical cables are used.

However, these existing closures usually have a configuration in which, in order to ensure that a fiber optic connector is inserted and mounted in the closure and does not slip out to the outside, the fiber optic connector can be fixed to a device by fastening a screw as an additional fixing means for fixing the fiber optic connector to the closure around an insertion hole in which the fiber optic connector is fitted.

Such a structure indicates that an operator needs to perform an additional laborious task whenever the fiber optic connector is mounted and dismounted, and has problems of not only increasing overall costs of equipment but also complicating an internal structure.

In this respect, there is an urgent demand for developing a device that enables a fiber optic connector to be easily and simply inserted and mounted and dismounted from outside the closure without using such an additional fixing means or device.

### [Citation List]

[Patent Literature]
(Patent Literature 1) Patent Document) US2020/0218017 A1 (Jul, 9, 2020)

### Summary of Invention

### Technical Problem

The present invention is made to solve the problems described above, and an object of the present invention is to provide an outdoor waterproof fiber optic connector having a structure enabling fixing and unfixing operation to or from a fiber optic connector locking device to be performed only by forward and backward operation of the fiber optic connector while the fiber optic connector is interlocked with the fiber optic connector locking device mounted inside an insertion hole of a closure by having an insertion groove and a stepped portion formed in an outer periphery of the fiber optic connector inserted and mounted in the insertion hole of the closure, the outdoor waterproof fiber optic connector further including a sealing member on the outer periphery which is in contact with the insertion hole in which the fiber optic connector is mounted to have a waterproof effect.

Other objects and advantages of the present invention will be described below and understood with reference to an embodiment of the present invention. In addition, the objects and advantages of the present invention can be realized by means and combinations represented in claims.

### Solution to Problem

According to the present invention, as a means to solve the above problems,
there is provided a fiber optic connector (100) that is inserted and mounted in a closure (300) for branching a single optical cable,
including:
   a connector main body (110) having a plug (114) formed at one end of the connector main body and a ferrule (113), in which an optical fiber is arranged, formed at a center of the one end so that the connector main body is fitted to an insertion hole (307) of the closure (300) and connected to an optical adaptor (310) inside the closure;
   a sealing member (120) enabling a waterproof function to be fulfilled as an outer periphery is in contact with an inside of a seating groove (121) by forming the seating groove (121) in an outer periphery of a middle portion of the connector main body (110);
   an insertion groove (130) formed in an outer periphery between the plug (114) and the sealing member (120) to be correspondingly latched and mounted to a fiber optic connector locking device (200) formed on an inner bottom surface of the insertion hole (307) to be fixed thereto; and
   a stepped portion (140) allowing a height difference to be formed between a first diameter portion (131) and a second diameter portion (132) by forming the second diameter portion (132) of the connector main body (110) on a rear end side of the insertion groove (130) to be relatively larger than the first diameter portion (131) of the connector main body (110) on a front end side of the insertion groove (130).

### Advantageous Effects of Invention

As described above, the present invention has is effective in that the fiber optic connector can be attached/detached in the insertion hole into which the fiber optic connector is inserted by forming the insertion groove and the stepped portion in the outer periphery of the fiber optic connector inserted and mounted, without an additional fixing means.

In addition, the present invention has a waterproof effect in that moisture and water are prevented from infiltrating through the insertion hole in which the fiber optic connector is fastened by providing the sealing member in the fiber optic connector.

### Brief Description of Drawings

FIG. 1 and FIG. 2 are views of an embodiment illustrating an outdoor waterproof fiber optic connector according to the present invention.
FIG. 3 is a view of the embodiment illustrating the connection between the fiber optic connector and an optical adaptor according to the present invention.
FIG. 4 is a view of the embodiment illustrating a shape of the inserted and mounted fiber optic connector according to the present invention.

### <Reference Signs List>

100: Fiber optic connector, 110: Connector main body
113: Ferrule, 114: Plug
115: Hook, 116: Dust cover
117: Boot, 118: Protrusion
120: Sealing member, 121: Seating groove
130: Insertion groove, 131: First diameter portion
132: Second diameter portion, 133: Inclined surface
134: First step, 200: Fiber optic connector locking device
300: Closure, 307: Insertion hole
310: Optical adaptor

### Description of Embodiments

Before various embodiments of the present invention are described in detail, it will be known that application thereof is not limited to details of configurations and arrangements of components to be described in the following detailed description or illustrated in the drawings. The present invention can be realized and implemented into other embodiments and can be carried out in various methods. Also, it will be known that expressions and predicates used herein with respect to terms such as a device or an element orientation (for example, "front", "back", "up", "down", "top", "bottom", "left", "right", or "lateral") are used only to simplify the description of the present invention and do not indicate or mean that the device or an element involved should simply have a particular orientation. In addition, terms such as "first" and "second" are used herein and in the accompanying claims for illustrative description and are not intended to indicate or mean relative significance or meaning between the terms.

The present invention has the following features to achieve the above-described object.

Hereinafter, a preferred embodiment of the present invention will be described in detail with reference to the accompanying drawings. Before the detailed description, terms or words used in this specification and claims are not construed as limited meanings of the common or dictionary meanings but have to be construed as meanings and concepts in accordance with technical ideas of the present invention based on the principle that an inventor can define a concept of a term in order to describe his or her invention in the best way, as appropriate.

Hence, since the embodiments described in this specification and configurations illustrated in the drawings are provided only as most preferred embodiments of the present invention and do not represent all of the technical ideas of the present invention, it should be understood that there can be various equivalents and modification examples which can substitute for the embodiments and the configurations of the present invention at the time of this application.

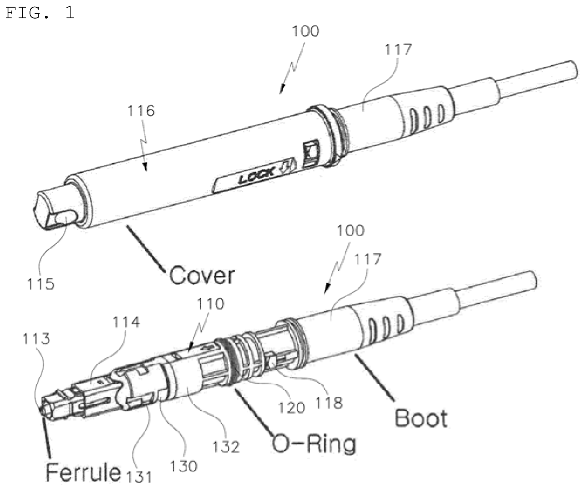

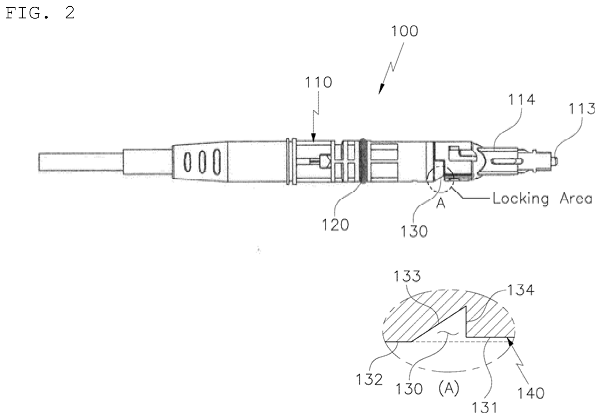

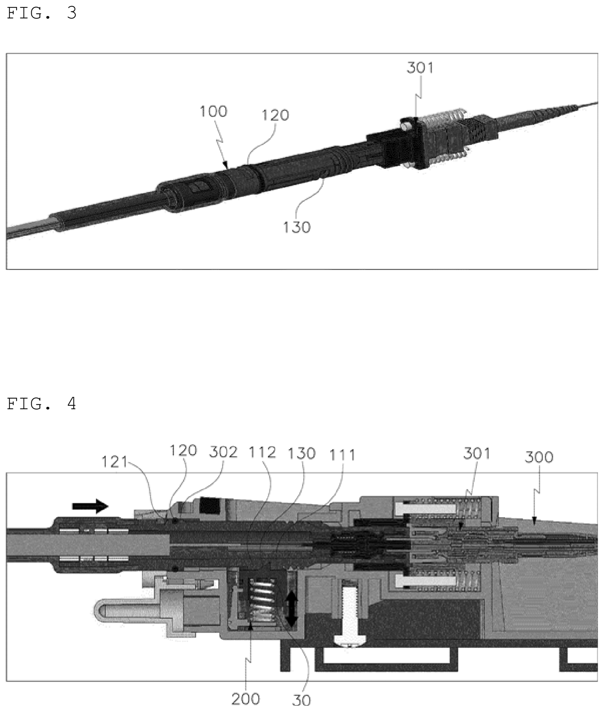

Hereinafter with reference to FIGS. 1 to 4, an outdoor waterproof fiber optic connector (100) according to a preferred embodiment of the present invention will be described in detail.

The outdoor waterproof fiber optic connector (100) is a fiber optic connector mounted in a closure (300) for branching an optical cable and includes a connector main body (110), a sealing member (120), an insertion groove (130), a stepped portion (140), and a dust cover (116).

The connector main body (110) is installed outside of a device such as the closure (300) (branching device) described above, and the connector main body (110) is inserted into an insertion hole (307) in the closure (300) and connected to an optical adaptor (310) inside the closure (300). In this respect, the connector main body (110) has a plug (114) formed at one end thereof and a ferrule (113), in which an optical fiber is arranged, formed at a center of the one end, and includes a boot (117) which protects an outer periphery formed from a middle portion to a rear end thereof.

In addition, the fiber optic connector (100) further includes, on an outer periphery at one end thereof, the dust cover (116) that is mounted in a longitudinal direction in a detachable manner. The dust cover (116) has, at a terminal end on one side thereof, a hook (115) which is used for fixing a wire for laying cable and enables the sealing member (120), the insertion groove (130), and the stepped portion (140) to be protected from the outside, and the dust cover (116) is fastened to, in a bayonet shape, a protrusion (118) of the fiber optic connector main body (110).

The sealing member (120) is a rubber ring having elasticity and is fitted in a seating groove (121) after the seating groove (121) is formed in an outer periphery of a middle portion of the connector main body (110), thereby enabling a waterproof function of blocking water or moisture from infiltrating the insertion hole (307) into which the connector main body 110 is inserted to be fulfilled as an inside of the insertion hole (307) and an outer periphery of the sealing member (120) are in contact with each other.

The insertion groove (130) is a groove that is formed at an outer periphery between the plug (114) and the sealing member (120) in the connector main body (110) to be correspondingly latched and mounted to a fiber optic connector locking device (200) formed on an inner bottom surface of the insertion hole (307) to be fixed thereto.

The stepped portion (140) is a latching portion of the fiber optic connector locking device (200) which allows a height difference to be formed between a first diameter portion (131) and a second diameter portion (132) by forming the second diameter portion (132) of the connector main body (110) on a rear end side of the insertion groove (130) to be relatively larger than the first diameter portion (132) of the connector main body (110) on a front end side of the insertion groove (130).

In this respect, the fitting groove (130) has a first step (134) formed by being vertically recessed from the first diameter portion (131) and an inclined surface (133) having an oblique shape from the first step (134) to the second diameter portion (132) and having a diameter that gradually increases, thereby forming the triangular fitting groove (130). A plunger formed on the fiber optic connector locking device (200) prevents the connector main body (110) from being detached from the inside of the insertion hole (307) by having an upper surface formed in a shape corresponding to the insertion groove (130) and being correspondingly inserted to the insertion groove (130).

Preferentially, the fiber optic connector locking device 200 positioned inside the plunger (30) has a structure that repeats lifting and lowering in which the plunger (30) formed on an upper surface of the fiber optic connector locking device (200) is lifted when pressed once and lowered when pressed again. Since an internal configuration can be variously modified depending on a user's implementation example, the internal configuration for such operation is not limited to some configuration as long as the plunger (30) of the fiber optic connector locking device (200) has a structure to be lifted and lowered.

The operation of the fiber optic connector (100) by the configuration described above is described as follows.

The fiber optic connector (100) has a structure in which the fiber optic connector (100) is operated in a first case in which, in a state where the plunger (30) is initially pressed, the fiber optic connector (100) moves forward by being in contact with the upper surface of the plunger (30), is lifted by pressing the plunger (30) as the second diameter portion (132) is correspondingly positioned to the plunger (30), and then is maintained in the state of being positioned in the insertion hole (307) as the plunger (30) is correspondingly inserted to the insertion groove (130) by moving the fiber optic connector (100) backward, and

in a second case in which, while the fiber optic connector (100) is inserted to the insertion hole (307), the fiber optic connector (100) is lowered to the initial position by further moving forward the fiber optic connector (100) so that the second diameter portion (132) presses the plunger (30) again, such that the first and second diameter portions (131) and (132) of the fiber optic connector (100) are not caught at the plunger (30) and the fiber optic connector (100) is moved backward to detach the fiber optic connector (100) from the insertion hole (307), and

the fiber optic connector (100) and the plunger (30) are detachable from each other by lifting/lowering interlocking operation of the plunger (30) due to forward and backward operation of the fiber optic connector (100).

Moreover, depending on the user's implementation example, the outdoor waterproof fiber optic connector having the configuration described above can be easily built in a field by including

a fusion splicing unit (which is a thermal fusion means (or device) for splicing a plurality of optical fibers to each other by thermal fusion and can be replaced by a variety of means as long as the means has such a function) inside the fiber optic connector (100), or can be easily built in a field by using a fiber optic connector ferrule accommodating a multicore optical fiber inside the fiber optic connector (100) or including a multicore optical fiber fusion splicing unit inside the fiber optic connector (100).

As described above, the present invention has been described with reference to the limited embodiments and drawings, and the present invention is not limited thereto. It should be understood that it is possible for a person with ordinary knowledge in the technical field to which the present invention pertains to variously modify and change the present invention within a range of equivalents of the technical ideas and the claims of the present invention to be described below.

## Claims

1. An outdoor waterproof fiber optic connector (100) that is inserted and mounted in a closure (300) for branching an optical cable, comprising:
a connector main body (110) having a plug (114) formed at one end of the connector main body and a ferrule (113), in which an optical fiber is arranged, formed at a center of the one end so that the connector main body is fitted to an insertion hole (307) of the closure (300) and connected to an optical adaptor (310) inside the closure;
a sealing member (120) enabling a waterproof function to be fulfilled as an outer periphery is in contact with an inside of a seating groove (121) by forming the seating groove (121) in an outer periphery of a middle portion of the connector main body (110);
an insertion groove (130) formed in an outer periphery between the plug (114) and the sealing member (120) to be correspondingly latched and mounted to a fiber optic connector locking device (200) formed on an inner bottom surface of the insertion hole (307) to be fixed thereto.

2. The outdoor waterproof fiber optic connector according to claim 1,
wherein the fitting groove (130) has a first step (134) formed by being vertically recessed from a first diameter portion (131), and an inclined surface (133) having an oblique shape from the first step (134) to a second diameter portion (132) and having a diameter that gradually increases, and
a plunger (30) formed on the fiber optic connector locking device (200) prevents the connector main body (110) from being detached from the inside of the insertion hole (307) by having an upper surface formed in a shape corresponding to the insertion groove (130) and being correspondingly inserted to the insertion groove (130).

3. The outdoor waterproof fiber optic connector according to claim 1, further comprising,
a dust cover (116) having, at a terminal end on one side, a hook (115) to pull the fiber optic connector (100), the dust cover being detachably mounted on an outer periphery of one end of the fiber optic connector (100) in a longitudinal direction and protecting the sealing member (120), the fitting groove (130), and a step portion (140) from the outside.

4. The outdoor waterproof fiber optic connector according to claim 2,
wherein the fiber optic connector (100) has a structure in which the plunger (30) formed on the fiber optic connector locking device (200) has a button shape and has a structure in which lifting and lowering movement is repeated,
the fiber optic connector (100) is operated in a first case in which, in a state where the plunger (30) is initially pressed, the fiber optic connector (100) moves forward by being in contact with the upper surface of the plunger (30), is lifted by pressing the plunger (30) as the second diameter portion (132) is correspondingly positioned to the plunger (30), and then is maintained in the state of being positioned in the insertion hole (307) as the plunger (30) is correspondingly inserted to the insertion groove (130) by moving the fiber optic connector (100) backward, and
in a second case in which, while the fiber optic connector (100) is inserted to the insertion hole (307), the fiber optic connector (100) is lowered to the initial position by further moving forward the fiber optic connector (100) so that the second diameter portion (132) presses the plunger (30) again, such that the first and second diameter portions (131 and 132) of the fiber optic connector (100) are not caught at the plunger (30) and the fiber optic connector (100) is moved backward to detach the fiber optic connector (100) from the insertion hole (307), and
the fiber optic connector (100) and the plunger (30) are detachable from each other by lifting/lowering interlocking operation of the plunger (30) due to forward and backward operation of the fiber optic connector (100).

5. The outdoor waterproof fiber optic connector according to claim 1,
wherein the dust cover 116 is fastened to, in a bayonet shape, a protrusion (118) of the fiber optic connector main body (110).

6. The outdoor waterproof fiber optic connector according to claim 1, further comprising:
a fusion splicing portion formed inside the fiber optic connector (100) to enable construction to be easily performed in a field.

7. The outdoor waterproof fiber optic connector according to claim 1,
wherein a fiber optical connector ferrule accommodating a multicore optical fiber is used in the fiber optic connector (100).

8. The outdoor waterproof fiber optic connector according to claim 1, further comprising:
a multicore optical fiber fusion splicing unit formed inside the fiber optic connector (100) to enable construction to be easily performed in a field.
